# DEMANDE DE BREVET EUROPEEN

(11) **EP 1 376 349 A1**
(43) Date de publication de la demande: **02.01.2004**
(21) Numéro de dépôt: 03291576.1
(22) Date de dépôt: 26.06.2003
(51) Int. Cl.: G06F 9/445

(54) **Interface graphique utilisateur permettant d'installer des programmes informatiques d'un lot de démarrage**

(30) Priorité: 26.06.2002 FR 0208040
(71) Demandeur: NEC Computers International B.V., 6603 BN Wijchen (NL)
(72) Inventeur: Fournet, Matthieu, 49000 Angers (FR); Montenegro, José, 49000 Angers (FR); Henry, Philippe, 49000 Angers (FR)
(74) Mandataire: Maillet, Alain

(57) **Abrégé**

La présente invention concerne une interface graphique utilisateur permettant à un utilisateur d'une machine informatique d'installer sur une unité de stockage (4) de ladite machine des programmes informatiques d'un lot de démarrage afin de pouvoir les lancer et les exécuter, lesdits programmes informatiques étant préalablement stockés sur des supports externes (9a, 9b, 9c).

Elle est caractérisée en ce qu'elle comporte une table qui est stockée initialement dans des moyens de mémorisation (3) et/ou des unités de stockage (4) de ladite machine informatique et qui recense les caractéristiques et les conditions d'utilisation de chaque programme dudit lot de démarrage, ladite interface commandant l'installation d'un programme sélectionné par l'utilisateur lorsque les caractéristiques dudit programme telles qu'elles sont lues dans ladite table sont compatibles avec ladite machine et que les conditions d'utilisation dudit programme telles qu'elles sont lues dans ladite table sont respectées.

## Description

La présente invention concerne une interface graphique utilisateur pour la sélection, l'installation ou la désinstallation de programmes informatiques sur un ordinateur. L'ordinateur considéré est par exemple un micro-ordinateur du type communément appelé PC. Quant aux programmes informatiques considérés, il peut s'agir de programmes de jeux, de programmes utilitaires, de programmes à but didactique, etc.

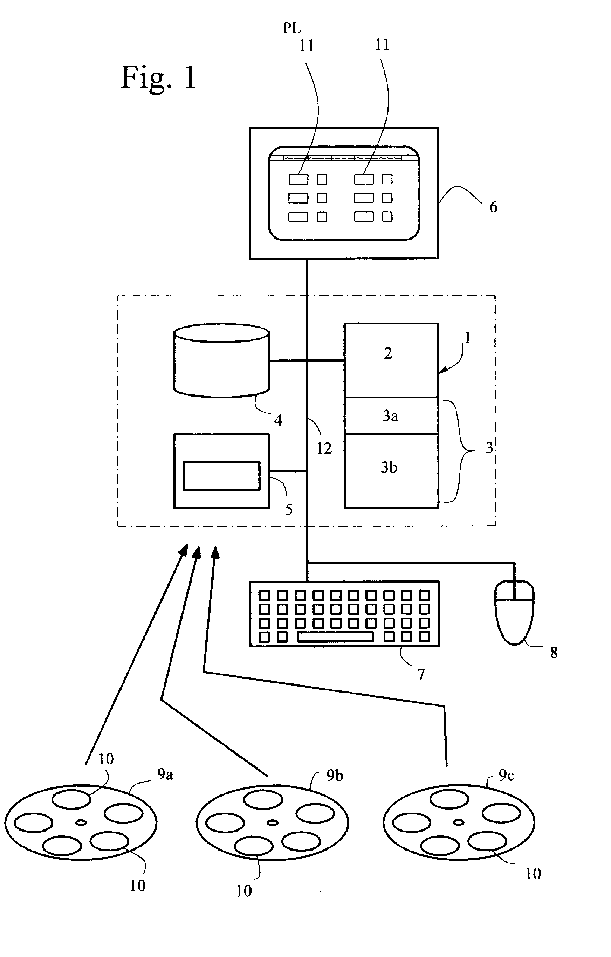

Un exemple simplifié d'une telle machine informatique est représenté schématiquement à la Fig. 1. Elle est essentiellement constituée d'une unité centrale 1 pourvue d'un processeur 2, d'une mémoire de travail 3, elle-même constituée d'une mémoire morte 3a et d'une mémoire à accès aléatoire 3b. Elle est connectée par un ou plusieurs bus appropriés 12 à des périphériques telle qu'une unité de stockage 4, qui est généralement un disque dur mais qui pourrait être tout autre unité équivalente, une unité 5 de lecture de supports externes 9a à 9c tels que des compacts disques dits CD ou DVD, un écran 6 sur lequel des informations peuvent être affichées, un clavier 7 permettant à l'utilisateur d'entrer des données et une souris 8 permettant de sélectionner et valider une information affichée sur l'écran 6.

L'unité centrale 1 a pour fonction essentielle de traiter des données sur la base de programmes et de données stockés dans sa mémoire de travail 3 et d'échanger des données avec les périphériques 4 à 6. Schématiquement parlant, au démarrage, l'unité centrale 1 travaille avec la mémoire morte 3a, puis commande le chargement de différents programmes de l'unité de stockage 4 dans la mémoire de travail 3, en particulier la mémoire à accès aléatoire 3b. Puis de nouveau, l'unité centrale 1 travaille avec sa mémoire 3.

Pour modifier le comportement de sa machine, l'utilisateur doit commander le transfert d'un programme ou d'une partie de ce programme stocké sur l'unité de stockage 4 vers la mémoire 3 et l'exécution à partir de la mémoire 3 par le processeur 2 des parties exécutables de ce programme. Cette opération est généralement appelée le lancement d'un programme. Au lancement d'un programme, la machine acquiert un comportement qui est celui qui a été défini par les concepteurs de ce programme. Comme il est connu en soi, le lancement d'un programme peut être effectué en cliquant au moyen de la souris 8 sur une icône représentative du programme correspondant affichée sur l'écran 6. Elle peut également être effectuée à l'initiative d'un autre programme.

Quand il est proposé à un utilisateur, un programme se trouve généralement sur un support externe, tels que des compacts disques CD ou DVD, il pourrait également s'agir d'autres supports tels que des clefs USB (Disk-On-Key USB), des cartes mémoires externes (dites Flash Cards, PC-Cards, ou Bus-Cards). ou d'autres encore. Des exemples de tels supports externes sont représentés sous les références 9a à 9c à la Fig. 1. On comprendra que pour pouvoir être lancé, un programme sur un support externe 9 doit d'abord être transféré totalement ou en partie seulement dans l'unité de stockage 4. Cette opération de transfert est appelée l'installation du programme. On notera qu'elle peut être un peu plus complexe qu'un simple transfert, car elle est généralement accompagnée d'opérations de décompression, de décryptage, etc.

Une fois installé, un programme peut être lancé tel qu'il a été expliqué ci-dessus. L'utilisateur qui veut donner de nouvelles fonctionnalités à sa machine doit y installer de nouveaux programmes, et les lancer.

Pour ne pas frustrer l'utilisateur qui vient d'acheter un micro-ordinateur, il est classique de livrer en même temps que la machine un lot de programmes informatiques, soit en version complète pour des programmes peu coûteux, soit en version d'essai à durée limitée ou de démonstration pour des programmes un peu plus complexes. Dans la suite de la description, on appellera ce lot de programmes un lot de démarrage car il permet à l'utilisateur de démarrer son travail avec sa machine et, dans le cas de programmes en version allégée ou de démonstration, de se faire une idée des programmes testés et d'en acquérir une version complète plus tard s'il le désire. Cette acquisition peut se faire classiquement dans un magasin spécialisé mais également par téléchargement à partir d'un serveur équipé de moyens pour délivrer une clef de fonctionnement et pour pouvoir effectuer un paiement sécurisé.

A la Fig. 1, on a représenté à titre d'exemple trois supports externes 9a à 9c dont chacun contient cinq programmes 10. L'ensemble de ces supports externes 9a à 9c peut constituer un lot de programmes de démarrage. Le nombre de programmes par lot peut être quelconque. Il en est également de même pour les supports qui constituent ce lot.

Or, l'installation d'un programme est généralement prise en charge par un programme spécialisé d'installation dont la fonction est de décompresser les fichiers constituant le programme et contenus dans le support externe, et de stocker les fichiers décompressés sur l'unité de stockage 4 de la machine. Il y a donc pour l'utilisateur un ensemble de fonctions à réaliser qui parfois peut s'avérer fastidieux et il y a par conséquent un besoin de faciliter cette opération.

De plus, pour fonctionner correctement, un programme informatique requiert des ressources machine, telles que des capacités de mémoire, des temps d'accès à des supports de stockage, des vitesses de traitement, etc. Des machines se différentient les unes des autres par des ressources différentes, une machine dite bas de gamme présentant moins de ressources qu'une machine dite haut de gamme. Il résulte de cette différentiation que certains programmes informatiques sont incapables de fonctionner correctement sur une machine qui n'a pas les ressources requises.

Pour diverses raisons, telles que l'adéquation entre programme à installer et ressources machine requises, mais également pour d'autres raisons, le fabricant peut décider de limiter l'accès à certains programmes du lot de démarrage et d'ainsi en interdire ou en autoriser l'installation sous certaines conditions.

Aujourd'hui, ce fabricant de micro-ordinateurs propose donc avec une machine de ressources données un lot de programmes informatiques de démarrage, par exemple sur support de disques, qui dépend de la machine elle-même, notamment de ses ressources. Il y a donc un tri des programmes à proposer en fonction de ces ressources, tri qui doit être fait en usine et qui peut s'avérer lourd à effectuer. Pour simplifier cette opération, il peut être formé un disque de grande capacité, en l'occurrence un DVD, qui regroupe plusieurs programmes informatiques différents constituant un lot de démarrage qui peut être affecté à un type de machine donnée. Néanmoins, le fait de regrouper plusieurs programmes informatiques sur un même support oblige à modifier ces programmes de manière à ce que l'installation d'un programme ne soit pas perturbée par la présence d'un autre programme. L'inconvénient de cette solution est donc qu'une modification d'un lot de démarrage, par exemple le retrait d'un programme d'un lot pour un autre programme plus intéressant, oblige à reconsidérer les modifications des programmes du lot, ce qui peut être fastidieux et long à faire, retardant d'autant l'offre au client.

Le but de l'invention est donc de proposer une interface graphique utilisateur qui ne présente pas les inconvénients mentionnés ci-dessus, c'est-à-dire qui soit simple à mettre en oeuvre pour son utilisateur, qui soit souple à mettre en oeuvre par le fabriquant de machines informatiques, notamment en lui évitant d'effectuer un tri de programmes en fonction des ressources de chaque machine vendue et en lui permettant une souplesse dans le choix des programmes proposés à l'utilisateur.

A cet effet, la présente invention concerne une interface graphique utilisateur permettant à un utilisateur d'une machine informatique d'installer sur une unité de stockage de ladite machine des programmes informatiques d'un lot de démarrage afin de pouvoir les lancer et les exécuter, lesdits programmes informatiques étant préalablement stockés sur des supports externes.

Selon la présente invention, cette interface graphique utilisateur est caractérisée en ce qu'elle comporte une table qui est stockée initialement dans des moyens de mémorisation et/ou des unités de stockage de ladite machine informatique et qui recense les caractéristiques et les conditions d'utilisation de chaque programme dudit lot de démarrage, ladite interface commandant l'installation d'un programme sélectionné par l'utilisateur lorsque les caractéristiques dudit programme telles qu'elles sont lues dans ladite table sont compatibles avec ladite machine et que les conditions d'utilisation dudit programme telles qu'elles sont lues dans ladite table sont respectées.

Avantageusement, ladite table comporte un champ dans lequel est stockée une information d'autorisation d'installation, ladite interface autorisant l'installation d'un programme si la valeur contenue dans ledit champ pour ledit programme est représentative d'une autorisation.

Avantageusement, ladite table comporte un champ dans lequel est stockée une information sur le mode d'accès de chaque programme, tel qu'un accès libre, un accès payant, etc., chaque programme étant crypté en fonction de son mode d'accès, ladite interface effectuant l'installation d'un programme en le décryptant préalablement en fonction de la valeur contenue dans ledit champ.

Avantageusement, ladite interface est prévue pour directement gérer la clef de cryptage d'au moins un programme du lot de démarrage, ou encore, pour utiliser un outil de gestion de clefs spécialisé. Dans l'un ou l'autre cas, elle est alors avantageusement prévue pour vérifier que l'utilisateur a bien obtenu une clef pour le programme qu'il désire installer et, si tel est le cas, installer ledit programme et, dans le cas contraire, mettre en oeuvre une procédure d'obtention de clef pour ledit programme puis l'installer.

Avantageusement, ladite table comporte un champ dans lequel est stockée, pour chaque programme, une information d'installation déjà effectuée, ladite interface n'installant pas un programme dont la valeur stockée dans ledit champ signifie que ledit programme a déjà été installé.

Avantageusement, ladite table comporte un champ dans lequel est stockée, pour chaque programme, l'identification dudit support externe dans lequel ledit programme est stocké.

Avantageusement encore, ladite interface comporte un outil de gestion d'images prévu pour lire des images respectives de programmes ou de parties de programme, pour recouvrer à partir desdites images les données relatives auxdits programmes ou aux parties de programme afin de pouvoir les installer sur une unité de stockage de ladite machine informatique, ledit outil de gestion étant vu par le système d'exploitation de ladite machine comme au moins une unité de stockage virtuelle. Ladite table comporte alors avantageusement un champ dans lequel est stocké, pour chaque programme, le nombre d'images nécessaires à son installation, ledit outil de gestion d'images, lors d'une installation d'un programme, lisant autant d'images que d'images nécessaires relatives audit programme et étant vu par le système d'exploitation de ladite machine comme autant d'unités de stockage virtuelles que d'images.

Avantageusement, ladite table comporte un champ dans lequel est stockée, pour chaque programme, une information relative à la nécessité de la présence ou pas d'un support externe contenant ledit programme, une partie dudit programme ou une image dudit programme ou d'une partie dudit programme.

Selon un mode de réalisation, ladite table comprend une première sous-table dans laquelle sont stockées les informations d'autorisation d'installation de tous les programmes et/ou les informations de mode d'accès auxdits programmes. Cette sous-table est alors avantageusement mémorisée dans une mémoire non-volatile de ladite machine informatique.

Selon un mode de réalisation, ladite table comprend une seconde sous-table qui recense, pour chaque programme, l'une au moins des informations relatives audit programme d'état d'installation, du nombre d'images, d'identification du support externe, de présence du support externe requise, ladite seconde sous-table étant stockée dans une zone d'une unité de stockage de ladite machine qui n'est pas accessible par le système d'exploitation de ladite machine informatique.

Ladite interface graphique utilisateur est avantageusement prévue pour limiter le nombre d'installations de programmes à accès libre à un nombre maximum autorisé prédéterminé. Elle peut également être prévue pour limiter le nombre de programmes à accès libre installés à un nombre maximum autorisé prédéterminé, moyennant obtention d'une clef.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 est une vue schématique simplifiée d'une machine informatique à laquelle peut être appliquée une interface graphique utilisateur selon la présente invention,
La Fig. 2a montre un exemple de table utilisée par une interface graphique utilisateur selon la présente invention,
La Fig. 2b montre un exemple d'affichage sur l'écran d'une machine informatique des données utilisée par l'interface graphique utilisateur de la présente invention,
La Fig. 3 est un diagramme montrant la gestion opérée par l'interface graphique selon la présente invention,
La Fig. 4 est un diagramme montrant les opérations mises en oeuvre par l'interface graphique utilisateur selon la présente invention lors de l'installation de programmes,
La Fig. 5 est un schéma montrant l'utilisation d'un outil de gestion d'images de programmes,
La Fig. 6 est un diagramme montrant les opérations mises en oeuvre par l'interface graphique utilisateur selon la présente invention lors du lancement d'un programme, et
Les Figs. 7a et 7b montrent comment sont mémorisées sur la machine informatique les données relatives à la table utilisée par l'interface graphique utilisateur selon la présente invention.

La présente invention concerne donc une interface de gestion de l'installation des programmes d'un lot de programmes de démarrage. Cette interface est avantageusement une interface graphique et comprend donc des moyens pour afficher des éléments graphiques sur l'écran 6 de la machine, par exemple des boutons tels que les boutons 11 de la Fig. 1, ainsi que des moyens pour prendre en compte des sélections d'éléments graphiques effectuées par l'utilisateur au moyen du clavier 7 ou de la souris 8. En réponse à ces sélections, l'interface déclenche des actions, telles que des installations de programme.

Selon la présente invention, cette interface est liée à la machine sur laquelle elle est installée. Elle est, dans un exemple de réalisation, constituée d'un programme qui est directement installé sur l'unité de stockage 4 de la machine. De plus, elle utilise une table qui est stockée dans la machine au moment de son initialisation chez le fabriquant et qui recense les caractéristiques et les conditions d'utilisation de chaque programme du lot de démarrage. Sur la base de ces caractéristiques et de ces conditions d'utilisation, l'interface autorisera ou pas l'installation d'un programme du lot de démarrage contenu sur un support externe.

D'un point de vue physique, cette table peut être stockée soit dans la mémoire 3, par exemple la mémoire morte 3a, soit dans l'unité de stockage 4, soit une partie dans la mémoire 3 et une autre partie dans l'unité de stockage 4. Ce point sera abordé, en ce qui concerne un mode de réalisation avantageux de la table, dans la suite de la présente description.

Pour éviter que l'utilisateur puisse installer un programme sans utiliser l'interface de l'invention, tous les programmes sont stockés cryptés sur le ou les supports externes 9. Au moment de l'installation d'un programme, une clef de décryptage est utilisée par l'interface pour le décrypter. Cette clef est stockée dans la machine, par ex. sur l'unité de stockage 4, par exemple encore sous la forme d'un fichier caché. Elle est par exemple cryptée avec le numéro de série de la machine pour éviter toute installation des programmes du lot de démarrage sur une autre machine que celle à laquelle ce lot était destiné. On comprendra que par ces moyens, l'installation directe d'un programme du lot sans passer par l'interface n'est pas possible.

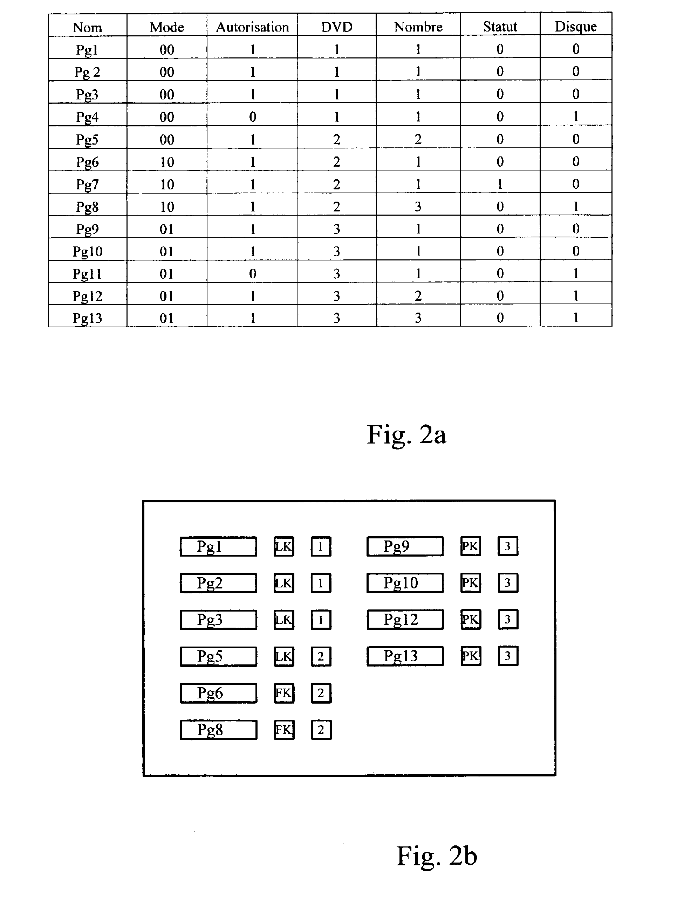

On a représenté à la Fig. 2a un exemple de table qui recense les informations de chacun des programmes d'un lot de démarrage, ces informations pouvant être nécessaires à l'interface de la présente invention pour fonctionner correctement. Pour chaque programme, cette table comporte donc les champs suivants:
- le nom du programme tel que l'interface l'affichera sur l'écran 6 de la machine,
- une information de mode d'accessibilité dont l'utilisation est donnée ci-dessous,
- un code d'autorisation d'installation qui prend une première valeur pour montrer que l'installation sur la machine considérée est autorisée par le fabricant et une seconde valeur dans le cas contraire,
- un identificateur du support externe sur lequel le programme considéré est stocké,
- le nombre de supports externes nécessaires pour faire fonctionner le programme,
- le statut actuel du programme, à savoir s'il est ou non déjà installé sur l'unité de stockage 4, et
- le champ disque qui indique si la présence d'au moins un disque du programme est nécessaire à son lancement (valeur du bit = 1 ) ou pas (valeur du bit = 0).

Dans le cas où l'interface de l'invention se présente sous la forme d'un programme, elle peut être lancée de différentes manières, soit directement après mise en marche de la machine, soit par l'utilisateur lui-même par l'une des voies offertes par la machine, soit par la mise en place dans l'unité de lecture 5 d'un support externe, tel que les supports 9a, 9b ou 9c, comprenant un programme du lot de démarrage. Dans ce dernier cas, chaque support externe 9a, 9b ou 9c comporte pour ce faire un fichier du type "autorun".

Une fois l'interface lancée, celle-ci affiche à l'écran 6 les noms, tels qu'ils apparaissent dans la table, des seuls programmes qui sont marqués, dans le champ autorisation d'installation, comme pouvant être installés et qui ne sont pas marqués, dans le champ statut actuel du programme de la table, comme étant déjà installés. On comprendra que pour ce faire, l'interface lira ces deux champs avant affichage.

En relation avec la Fig. 2a, un tel écran peut être du type montré à la Fig. 2b. Les noms apparaissent sur des boutons que l'utilisateur peut sélectionner pour marquer son intention d'effectuer l'installation du programme correspondant. On remarquera que les programmes nommés Pg4 et Pg11 ne sont pas autorisés à être installés (bit autorisation à zéro) et que le programme nommé Pg7 est déjà installé (bit statut à un).

Sur l'écran 6, l'information de mode d'accessibilité est visible en face du nom du programme correspondant sous la forme des trois symboles LK, FK, et PK. L'information de mode d'accessibilité en elle-même peut prendre une valeur parmi trois, par exemple codées sur 2 bits : 00, 01 et 10, pour les cas respectifs suivants:
- le programme est à accès libre et illimité (symbole LK). Son décryptage nécessitera une clef, dite clef locale, qui est par exemple formée d'un code donné librement à l'utilisateur et du numéro de série de la machine,
- le programme est crypté par un outil de cryptage spécialisé et nécessite pour son installation que son utilisateur obtienne une clef dite payante (symbole PK),
- le programme peut être installé en mode libre d'accès mais fait partie des programmes dont le nombre à installer est limité à un nombre maximum 1 si l'utilisateur ne fait rien de spécial ou à un nombre maximum M si l'utilisateur fait au contraire une demande de clef à un serveur via par exemple un site Internet. Ce mode est dit libre et est symbolisé par le symbole FK.

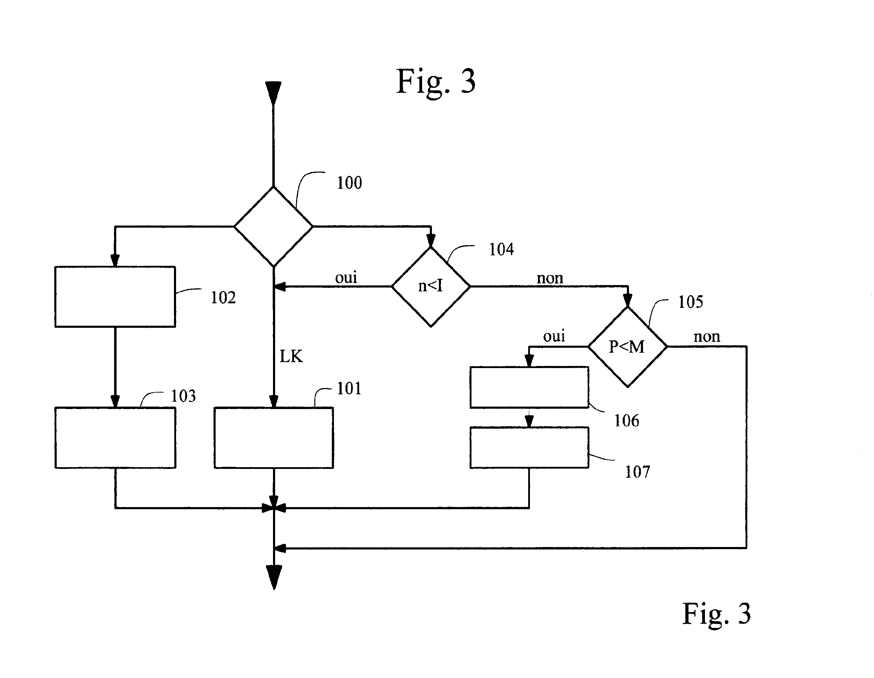

On a représenté à la Fig. 3, un mode d'utilisation par l'interface de l'information de mode de disponibilité. Une fois que l'utilisateur a sélectionné un programme à installer, par exemple en cliquant sur un des boutons de l'écran 6, l'interface lit l'information de mode de disponibilité associé à ce programme et, en fonction de la valeur prise par cette information, met en oeuvre une opération de routage 100 soit, dans le mode libre d'accès LK, vers une installation 101 du programme en mode libre d'accès, soit, dans le mode d'accès payant PK, vers une obtention 102 d'une clef par l'utilisateur suivie par une installation 103 du programme en mode payant. Dans le troisième mode, le fonctionnement peut être le suivant. En 104, l'interface vérifie si le nombre d'installations de programme à accès libre **n** déjà effectuées est inférieur à un nombre maximum autorisé I. Si oui, elle met en oeuvre une installation 101 en mode d'accès libre. Sinon, elle vérifie en 105 si, moyennant l'obtention d'une clef auprès d'un serveur approprié, une nouvelle installation peut être effectuée (le nombre de programmes installés P est inférieur au nombre M). Si oui, une demande de clef 106 est faite par l'utilisateur et l'installation du programme 107 est effectuée. Sinon, le programme n'est pas installé.

On notera que dans un mode de réalisation de la présente invention, les étapes 104 à 107 pourraient être supprimées. Dans ce cas, l'information de disponibilité pourrait ne comporter que deux valeurs, codées par exemple en un seul bit.

On constate donc que dans cet exemple, il y a trois types de clefs. La clef locale (mode LK) est fournie à l'utilisateur, par exemple par l'interface elle-même, et l'utilisateur ne devra que la valider pour que celle-ci soit stockée, par exemple sur l'unité de stockage 4 de la machine. La clef libre (mode FK) est également fournie à l'utilisateur mais par téléphone ou sur un site que l'utilisateur aura appelé. Enfin, la clef payante (mode PK) est obtenue par l'utilisateur en faisant la demande. Toutes ces clefs peuvent être gérées par un outil de cryptage/décryptage sécurisé et approprié.

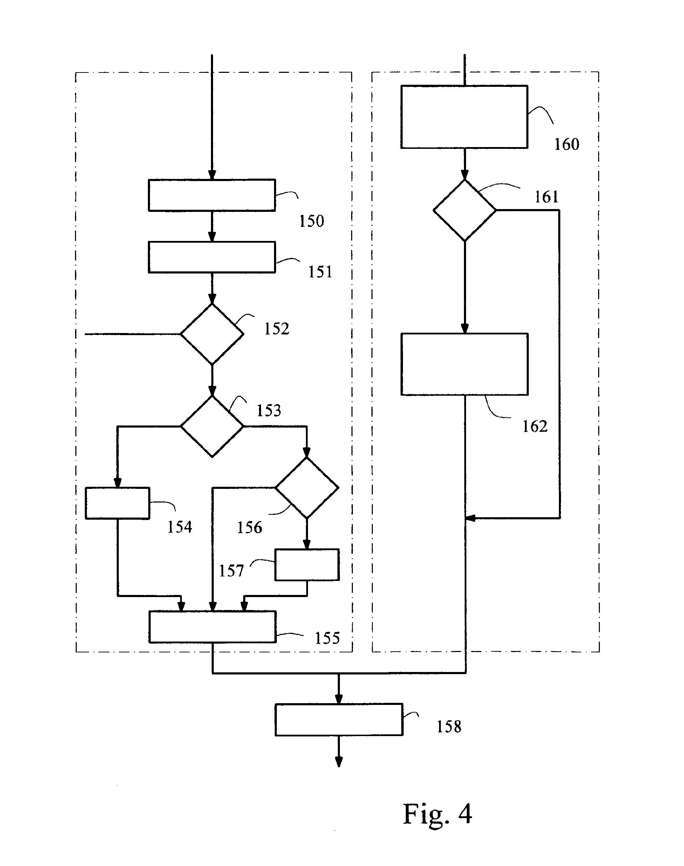

Au lancement de l'installation du programme en mode LK (étape 101 de la Fig. 3), dans une étape 150 (voir Fig. 4), l'utilisateur entre son numéro de clef, puis, dans l'étape 151, celui-ci est désassemblé pour donner le numéro de série de la machine et le code du programme. En 152, ce numéro de série et ce code sont vérifiés puis, s'ils sont corrects, il est vérifié le mode de cryptage (étape 153). S'il s'agit d'un mode de cryptage interne, le fichier de lancement d'installation du programme (généralement appelé *setup.exe)* est décrypté en 154 puis lancé en 155. Si le mode de cryptage utilise un outil de cryptage sécurisé et spécialisé, il est vérifié en 156 si un fichier de licence est enregistré dans la machine (par exemple dans son unité de stockage 4). Si tel est le cas, le fichier de lancement d'installation du programme est directement lancé en 155. Si tel n'est pas le cas, alors un fichier de licence est installé en 157 puis le fichier de lancement d'installation du programme est lancé en 155. Une fois le lancement du programme d'installation effectué, l'installation du programme se poursuit en 158.

Au lancement du programme dans les modes PK et FK (étapes 103 et 107 de la Fig. 3), le fichier de lancement d'installation du programme (généralement *setup.exe*) est directement lancé en 160. Il est alors vérifié (en 161) si un fichier de licence est enregistré sur la machine (généralement dans l'unité de stockage 4) et si tel est le cas, l'installation se poursuit en 158. Si tel n'est pas le cas, une licence est obtenue en 162, par exemple auprès d'un site approprié, et un fichier de licence est créé et stocké sur l'unité de stockage 4. Puis l'installation se poursuit en 158.

Sur l'écran 6 représenté à la Fig. 2b, apparaît aussi l'identifiant du support externe sur lequel est stocké le programme correspondant. Cet identifiant apparaît par exemple sous la forme d'un chiffre. Cette information est nécessaire à l'utilisateur pour connaître le disque à insérer pour réaliser l'installation du programme correspondant.

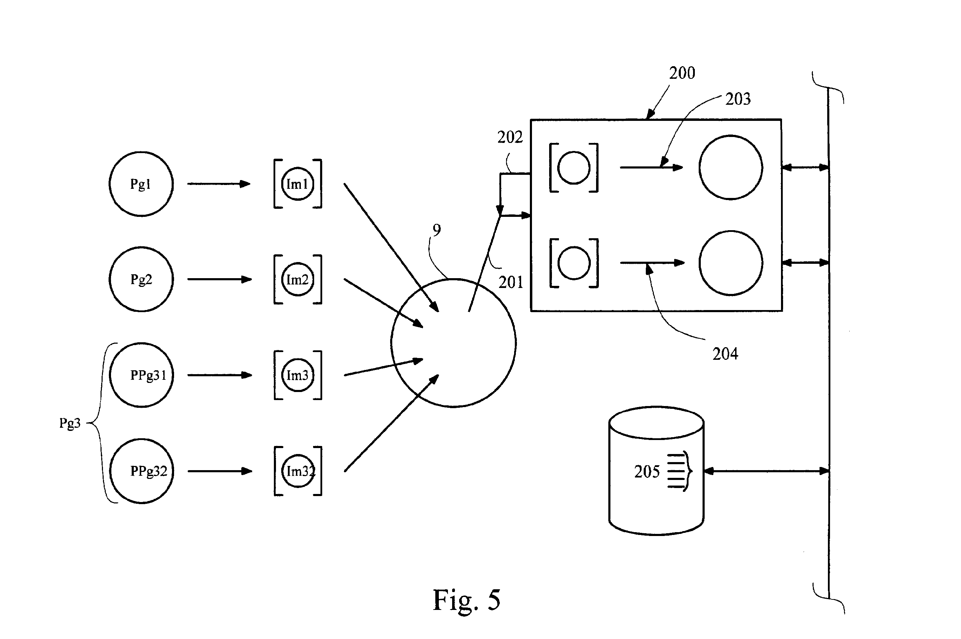

Dans le mode de réalisation qui est représenté à la Fig. 1, plusieurs programmes 10 sont présents sur chaque support externe 9a, 9b, 9c. Comme cela est montré à la Fig. 5, chaque programme Pg1, Pg2 ou partie de programme SPg31 et SPg32 d'un même programme Pg3 est enregistré sur un support externe 9 sous forme d'une "image" Iml, Im2, Im31 et Im32. On appelle ici une image une entité qui contient toutes les données relatives à un programme ou à une partie du programme et qui, grâce à un processus de recouvrement, permet de recouvrer toutes ces données.

Au moment de l'installation d'un programme, un outil de gestion d'images 200 lit en 201 son image ou une image d'une de ses parties et, ce, sous la commande d'un processus 202, effectue en interne un processus de recouvrement 203 des données originales du programme ou d'une partie de celui-ci, puis effectue, selon un processus d'installation 205, l'installation des fichiers du programme dans l'unité de stockage 4. On notera que, pendant cette phase d'installation, le système d'exploitation de la machine voit sur le bus 12 l'outil de gestion 200 comme s'il était une unité de stockage.

Dans la table représentée à la Fig. 2a, on peut encore remarquer le champ "nombre". Ce nombre correspond au nombre d'images nécessaires pour installer le programme concerné. On remarquera qu'à la Fig. 5, deux images sont traitées par l'outil de gestion 200 et que deux processus de recouvrement 203 et 204 sont mis en oeuvre. Ainsi, l'outil de gestion 200 est prévu pour pouvoir être vu par le système d'exploitation de la machine comme autant d'unités de stockage virtuelles que de nombre d'images nécessaires à l'installation (en l'occurrence, dans le cas de la Fig. 5, deux).

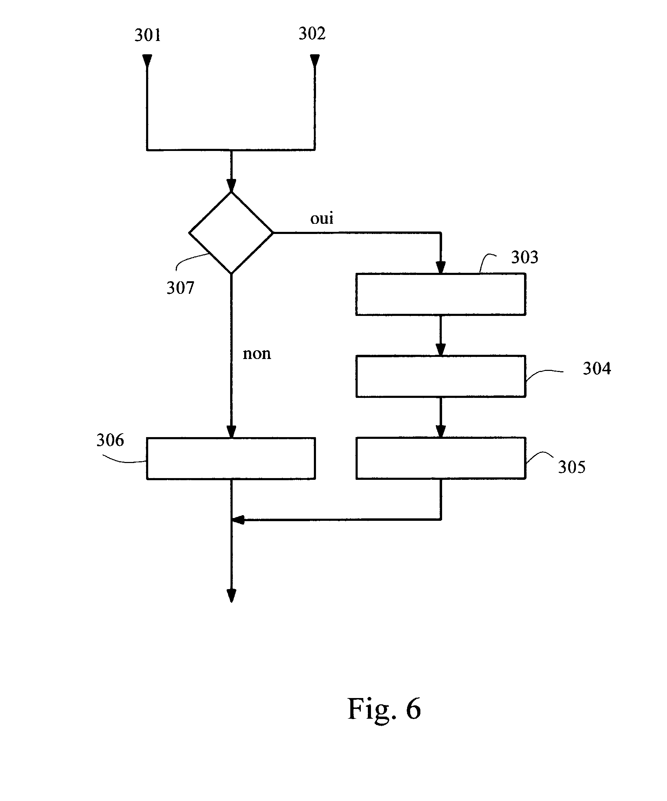

Le programme qui a été installé peut être lancé pour être exécuté (voir Fig. 6) en utilisant l'interface elle-même 301 ou directement par tout moyen 302 approprié sur la machine.

Dans le cas où la présence du support externe 9 contenant une image du programme est nécessaire à la machine pour l'exécution de ce programme et pour en extraire des informations, l'outil de gestion 200 extrait l'image du programme présente sur le support externe 9 et peut alors communiquer, par exemple à l'unité de traitement 1, les informations que cette dernière requiert qu'elle a recouvrées à partir de cette image. Dans ce cas également, l'outil de gestion 200 est vu par l'unité de traitement 1 comme une unité de stockage virtuelle dans laquelle le programme est stocké.

Ainsi, dans ce cas encore, préalablement au lancement du programme, son image doit être insérée en 303 dans l'outil de gestion 200 qui doit être préparé en tant qu'une unité de stockage virtuelle. Le programme est ensuite lancé en 304. Après fermeture du programme, son image est retirée en 305 de l'outil de gestion 200 et l'unité de stockage virtuelle est effacée.

Dans le cas où la présence du support externe 9 n'est pas nécessaire, le lancement du programme est effectué directement en 306.

Pour que le routage 307 se fasse correctement selon que cette présence est nécessitée ou pas, il peut être nécessaire de modifier le point d'accès au programme (par exemple le raccourci dans le menu démarrer de la machine) après son installation. Cette modification est effectuée par l'interface elle-même sur la base du contenu du champ "disque". Dans l'exemple de la table de la Fig. 2a, les programmes Pg4, Pg8, Pg11 à Pg13 nécessitent la présence d'un support externe 9.

On notera que dans le cas où le programme est stocké sur le support externe 9 sous la forme de plusieurs images, dans l'étape 303, toutes les images sont utilisées par l'outil de gestion 200 qui est alors vu par le système d'exploitation de la machine comme autant d'unités de stockage virtuelles que d'images utilisées.

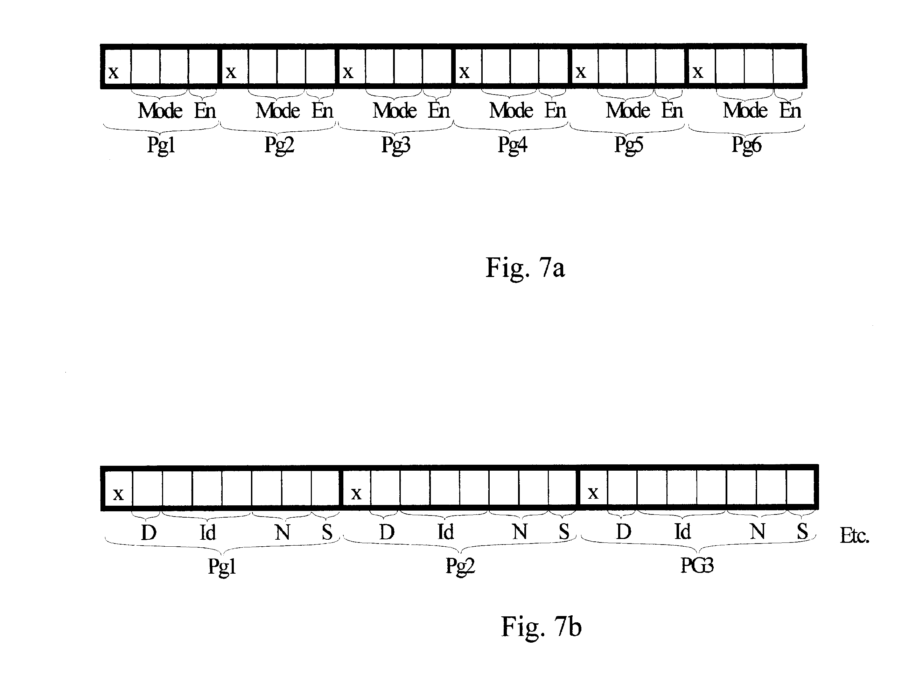

Les informations de la table sont enregistrées sur tout support approprié. Néanmoins, pour pouvoir faciliter les opérations de remise en marche suite à un reformatage de l'unité de stockage 4, il est apparu avantageux de stocker ces informations comme suit est conformément à la Fig. 7. Les informations de mode, d'autorisation sont codées dans une première sous-table que comporte une mémoire non-volatile telle que la mémoire morte 3a de la machine. Par exemple dans ce dernier cas, cette première sous-table est incluse dans une zone de la mémoire morte 3a qui est couramment appelée SMBIOS. Les bits qui portent ces informations sont regroupés par programme (par exemple, comme dans le cas de la Fig. 7a, un quartet par programme) puis mis bout à bout. L'allocation d'un groupe à un programme est déterminée par le décalage (offset) entre le premier groupe et le groupe considéré.

Quant aux informations concernant le statut du programme, le nombre d"'images" du programme, le numéro du support externe concerné et l'information de présence du disque requise, elles sont mises en place dans un fichier stocké sur l'unité de stockage 4, de préférence dans une zone de celle-ci qui n'est pas accessible par le système de gestion de fichiers du système d'exploitation de la machine. Cette zone est par exemple constituée de secteurs cachés. Ainsi, cette zone ne sera pas affectée par un formatage de l'unité de stockage 4. Avantageusement, comme précédemment, les bits qui portent ces informations sont regroupés par programme (par exemple, comme dans le cas de la Fig. 7b, un octet par programme) puis mis bout à bout. L'allocation d'un groupe à un programme est déterminée par le décalage (offset) entre le premier groupe et le groupe considéré. On notera que ce décalage doit être le même que les informations précédentes stockées dans la mémoire morte 3a.

## Revendications

1. Interface graphique utilisateur permettant à un utilisateur d'une machine informatique d'installer sur une unité de stockage (4) de ladite machine des programmes informatiques d'un lot de démarrage afin de pouvoir les lancer et les exécuter, lesdits programmes informatiques étant préalablement stockés sur des supports externes (9a, 9b, 9c), **caractérisée en ce qu'**elle comporte une table qui est stockée initialement dans des moyens de mémorisation (3) et/ou des unités de stockage (4) de ladite machine informatique, ladite table recensant les caractéristiques et les conditions d'utilisation de chaque programme dudit lot de démarrage et comportant un champ dans lequel est stockée une information d'autorisation d'installation, ladite interface commandant l'installation d'un programme sélectionné par l'utilisateur lorsque les caractéristiques dudit programme telles qu'elles sont lues dans ladite table sont compatibles avec ladite machine, lorsque les conditions d'utilisation dudit programme telles qu'elles sont lues dans ladite table sont respectées et lorsque la valeur contenue dans ledit champ pour ledit programme est représentative d'une autorisation.

2. Interface graphique utilisateur selon la revendication 1, **caractérisée en ce que** ladite table comporte un champ dans lequel est stockée une information sur le mode d'accès de chaque programme, tel qu'un accès libre, un accès payant, etc., chaque programme étant crypté en fonction de son mode d'accès, ladite interface effectuant l'installation d'un programme en le décryptant préalablement en fonction de la valeur contenue dans ledit champ.

3. Interface graphique utilisateur selon la revendication 2, **caractérisée en ce qu'**elle est prévue pour directement gérer la clef de cryptage d'au moins un programme du lot de démarrage.

4. Interface graphique utilisateur selon la revendication 2 ou 3, **caractérisée en ce qu'**elle utilise un outil de gestion de clefs spécialisé.

5. Interface graphique utilisateur selon une des revendications 3 ou 4, **caractérisé en ce qu'**elle est prévue pour vérifier que l'utilisateur a bien obtenu une clef pour le programme qu'il désire installer et, si tel est le cas, installer ledit programme et, dans le cas contraire, mettre en oeuvre une procédure d'obtention de clef pour ledit programme puis l'installer.

6. Interface graphique utilisateur selon l'une des revendications précédentes, **caractérisée en ce que** ladite table comporte un champ dans lequel est stockée, pour chaque programme, une information d'installation déjà effectuée, ladite interface n'installant pas un programme dont la valeur stockée dans ledit champ signifie que ledit programme a déjà été installé.

7. Interface graphique utilisateur selon l'une des revendications précédentes, **caractérisée en ce que** ladite table comporte un champ dans lequel est stockée, pour chaque programme, l'identification dudit support externe (9) dans lequel ledit programme est stocké.

8. Interface graphique utilisateur selon l'une des revendications précédentes, **caractérisée en ce qu'**elle comporte un outil de gestion d'images (200) prévu pour lire des images (Im 1,..., Imn) respectives de programmes ou de parties de programme (Pg 1, ..., Pgn), pour recouvrer à partir desdites images (Im 1, ..., Imn) les données relatives auxdits programmes ou aux parties de programme afin de pouvoir les installer sur une unité de stockage (4) de ladite machine informatique, ledit outil de gestion (200) étant vu par le système d'exploitation de ladite machine comme au moins une unité de stockage virtuelle.

9. Interface graphique utilisateur selon la revendication 8, **caractérisée en ce que** ladite table comporte un champ dans lequel est stocké, pour chaque programme, le nombre d'images nécessaires à son installation, ledit outil de gestion d'images (200), lors d'une installation d'un programme, lisant autant d'images (Im) que d'images nécessaires relatives audit programme et étant vu par le système d'exploitation de ladite machine comme autant d'unités de stockage virtuelles que d'images.

10. Interface graphique utilisateur selon une des revendications précédentes, **caractérisée en ce que** ladite table comporte un champ dans lequel est stockée, pour chaque programme, une information relative à la nécessité de la présence ou pas d'un support externe contenant ledit programme, une partie dudit programme ou une image dudit programme ou d'une partie dudit programme.

11. Interface graphique utilisateur selon une des revendications précédentes, **caractérisée en ce que** ladite table comprend une première sous-table dans laquelle sont stockées les informations d'autorisation d'installation de tous les programmes.

12. Interface graphique utilisateur selon une des revendications précédentes, **caractérisée en ce que** ladite table comprend ladite ou une première sous-table dans laquelle sont stockées les informations de mode d'accès auxdits programmes.

13. Interface graphique utilisateur selon la revendication 11 ou 12, **caractérisée en ce que** ladite première sous-table est mémorisée dans la mémoire morte de ladite machine informatique.

14. Interface graphique utilisateur selon une des revendications précédentes, **caractérisée en ce que** ladite table comprend une seconde sous-table qui recense, pour chaque programme, l'une au moins des informations relatives audit programme d'état d'installation, du nombre d'images, d'identification du support externe, de présence du support externe requise, ladite seconde sous-table étant stockée dans une zone d'une unité de stockage (4) de ladite machine qui n'est pas accessible par le système d'exploitation de ladite machine informatique.

15. Interface graphique utilisateur selon une des revendications précédentes, **caractérisée en ce qu'**elle est prévue pour limiter le nombre d'installations de programmes à accès libre à un nombre maximum autorisé prédéterminé.

16. Interface graphique utilisateur selon une des revendications précédentes, **caractérisée en ce qu'**elle est prévue pour limiter le nombre de programmes à accès libre installés à un nombre maximum autorisé prédéterminé, moyennant obtention d'une clef.
